# EUROPEAN PATENT APPLICATION

(11) **EP 2 641 767 A1**
(43) Date of publication of application: **25.09.2013**
(21) Application number: 13160054.6
(22) Date of filing: 19.03.2013
(51) Int. Cl.: B60K 11/08, F01P 7/10

(54) **Grill shutter device**

(30) Priority: 21.03.2012 JP 2012063953
(71) Applicant: Aisin Seiki Kabushiki Kaisha, Aichi-ken 448-8650 (JP)
(72) Inventor: Asano, Yoshimasa, Kariya-shi, Aichi 448-8650 (JP); Maeta, Kenji, Kariya-shi, Aichi 448-8650 (JP); Hori, Kenji, Kariya-shi, Aichi 448-8650 (JP); Saito, Takashi, Kariya-shi, Aichi 448-8650 (JP); Suzuki, Yuji, Kariya-shi, Aichi 448-0027 (JP)
(74) Representative: Winter, Brandl, Fürniss, Hübner, Röss, Kaiser, Polte - Partnerschaft

(57) **Abstract**

A grill shutter device (10) that has movable fins (14) rotating around a rotation shaft (19), and is able to control a flow rate of air flowing into a vehicle body from a grill opening portion, based on opening and closing operation of a shutter mechanism (15) provided in the grill opening portion of a front portion of the vehicle body, in which fin lengths of two directions with a rotation center of the movable fin interposed therebetween are set to unequal lengths so that moment of an opening direction is generated in the movable fin based on the pressure of the air flowing-in from the grill opening portion, and when the movable fin rotates in a closing direction, a wall surface forming a flow path of the air between the wall surface and a leading end is located in a direction that the leading end of the movable fin moves.

## Description

### TECHNICAL FIELD

This disclosure relates to a grill shutter device.

### BACKGROUND DISCUSSION

In the related art, there have been grill shutter devices capable of controlling a flow rate of air flowing into an engine compartment from a grill opening portion, based on the opening and closing operation of a shutter mechanism provided in the grill opening portion of a vehicle body front portion. For example, in a grill shitter device described in JP 2010-260440A (Reference 1), the grill shutter mechanism is formed by arranging and placing a plurality of movable fins inside a frame provided in the grill opening portion. Moreover, it is possible to open and close a flow path formed inside the frame, by rotating each movable fin around a rotation shaft by driving of the motor.

That is, for example, when the motor runs at high-speed, by limiting the in-flow of air into the engine compartment in the state of closing the shutter mechanism, aerodynamic performance (for example, "Cd value" or the like) thereof can be improved. Furthermore, at the time of engine start-up, by suppressing the flow rate flowing into the radiator, the warming-up time thereof can be shortened. Moreover, when the engine temperature tends to rise, by increasing the flow rate flowing into the engine compartment in the state of opening the shutter mechanism, the engine temperature can be suitably managed.

Furthermore, in such a grill shutter device, after the normal opening and closing control is completed by turning an ignition switch (an IG switch) off, a configuration which performs the opening operation of the shutter mechanism is commonly used. Moreover, JP 2010-260440A discloses a configuration that forcibly stops the normal opening and closing control, and promptly performs the opening operation of the shutter mechanism, when voltage supplied to a drive motor of the shutter mechanism is lowered.

That is, for example, when the shutter mechanism is fixed in the closed state, such as, at the time of the system failure, there is possibility that the flow rate of air flowing into the vehicle body may be short, and as a result, there is a concern that the cooling performance of a heat generating part such as an engine may decline. For this reason, in the grill shutter device, securing of the opened state thereof becomes a significant problem.

Based on this point, the grill shutter device described in JP 2010-260440A secures the opened state of the shutter mechanism when the required driving voltage can be secured. Moreover, thereby, there is provided a configuration that avoids the vehicle from entering the running state in the state where the shutter mechanism is fixed in the closed manner.

However, in the grill shutter device, stability of the closed state in the shutter mechanism also becomes one of the important problems. That is, in order to keep the shutter mechanism in the closed state, there is a need to maintain the operation positions of each movable fin in response to a pressure (a wind pressure) of air flowing-in from the grill opening portion. For this reason, there is a problem that the drive motor increases in size so as to secure the required drive force.

Thus, for example, a configuration is considered which does not transmit the reverse input rotation from an output side, by providing a clutch in the middle of a power transmission path between each movable fin and the drive motor or using a worm gear, etc., in a decelerator. However, the configuration thereof is complicated due to the provision of the clutch. Moreover, when there is provided a configuration which does not permit the reverse rotation input from the output side, there is a problem that it is impossible to manually perform the opening operation of the shutter mechanism from the movable fin side, even if a passenger notices fixing of the shutter mechanism in a closed state. At this point, a room for improvement remains.

This disclosure has been made in order to solve the above-described problems, and a need thus exists for a grill shutter device capable of combining the reliable opening operation of the shutter mechanism with stability of the closed state thereof by the simple configuration.

### SUMMARY

In order to solve the above-described problems, according to a first aspect of this disclosure, there is provided a grill shutter device that has movable fins rotating around a rotation shaft and is able to control a flow rate of air flowing into a vehicle body from a grill opening portion, based on the opening and closing operation of a shutter mechanism provided in the grill opening portion of a front portion of the vehicle body, in which fin lengths of two directions with a rotation center of the movable fin interposed therebetween are set to unequal lengths so that moment of an opening direction is generated in the movable fin based on the pressure of the air flowing-in from the grill opening portion, and when the movable fin rotates in a closing direction, a wall surface forming a flow path of the air is located between the wall surface and a leading end, in a direction in which the leading end of the movable fin moves.

That is, the moment of the opening direction is generated in the movable fin based on the pressure (the air pressure) of the air flowing-in from the grill opening portion, whereby the opening operation of the shutter mechanism is easily carried out. As a result, the opening operation of the shutter mechanism can be more reliably carried out. Moreover, particularly, in a running state where the heat generating part (the engine or the like) needs to be cooled, it is possible to effectively prevent the shutter mechanism from being fixed in the closed state. Furthermore, since the movable fin rotates up to a position close to a fully-closed state, in a flow path formed between the tip of the fin and the wall surface, a negative pressure based on a flow velocity of the air flowing through the flow path is generated (a Venturi effect). Moreover, it is possible to stably maintain the movable fin at the rotation position close to the fully-closed state using the negative pressure, without requiring a huge drive force. In addition, there is no need for a complicated holding mechanism such as a clutch, and there is also no need for a configuration that restricts the reverse input rotation from the output side using the worm gear or the like. As a result, when a passenger notices that the closed fixing occurs in the shutter mechanism, it is possible to manually carry out the opening operation of the shutter mechanism from the movable fin side. Accordingly, according to the above-described configuration, it is possible to combine the reliable opening operation of the shutter mechanism with stability of the closed state thereof, by the simple configuration that permits the reverse input rotation from the output side.

According to a second aspect of this disclosure, the wall surface may be formed in a structure that supports the movable fin.

That is, for example, by forming the wall surface in a rigid structure such as a framework-like frame, the negative pressure generated in the flow path thereof can be effectively used, and is possible to effectively generate the moment of the closing direction in the movable fin. Thus, according to the above-described configuration, it is possible to more stably maintain the shutter mechanism in the closed state.

According to a third aspect of this disclosure, a plurality of the movable fins arranged in parallel may be included, and each of the respective movable fins may be placed so as to overlap with the movable fin of an adjacent row in an in-flow direction of the air, by the rotation in the closing direction.

According to the above-described configuration, an outer surface of another movable fin is used as the wall surface, and the flow path is formed in a tip of the fin. Moreover, it is possible to more effectively generate the movement of the closing direction in each movable fin, by the use of the negative pressure generated in the flow path. As a result, it is possible to more stably maintain the shutter mechanism in the closed state.

According to a fourth aspect of this disclosure, the movable fin may be configured so that the moment of the opening direction based on gravitational force is generated.

According to the above-described configuration, the opening operation of the shutter mechanism is more easily carried out. As a result, it is possible to more reliably carry out the opening operation of the shutter mechanism.

According to this disclosure, it is possible to provide a grill shutter device capable of combining the reliable opening operation of the shutter mechanism with stability of the closed state thereof by the simple configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view that shows a schematic configuration of a vehicle equipped with a grill shutter device according to an embodiment disclosed here;
Fig. 2 is a perspective view of the grill shutter device;
Fig. 3 is a cross-sectional view of the grill shutter device;
Fig. 4 is an explanatory view of a flow path formed between an upper framework portion of a frame and a fin tip of a movable fin;
Fig. 5 is an explanatory view of a flow path formed between a lower framework portion of the frame and the fin tip of the movable fin;
Fig. 6 is an explanatory view of a flow path formed between the fin tips of respective movable fins;
Fig. 7 is a cross-sectional view that shows a schematic configuration of a grill shutter device of another example; and
Fig. 8 is a cross-sectional view that shows a schematic configuration of a grill shutter device of another example.

### DETAILED DESCRIPTION

Hereinafter, an embodiment in which this disclosure is embodied will be explained with reference to the attached drawings.

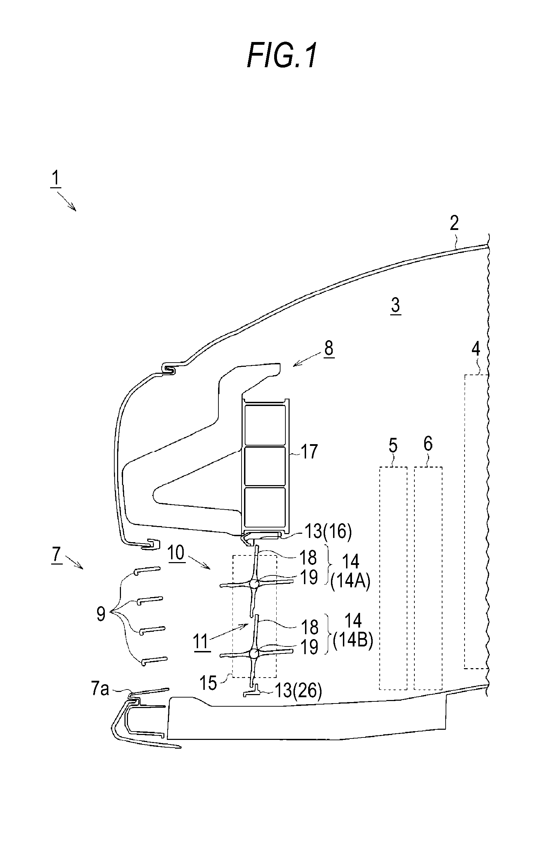

In a vehicle 1 shown in Fig. 1, in an engine compartment 3 formed inside a vehicle body 2, a radiator 5 for cooling an engine 4 thereof is accommodated. Furthermore, in a front portion (an end portion of a left side in Fig. 1) of the vehicle body 2, a grill opening portion 7 is formed through which an outer space of the front of the vehicle and an inner space of the vehicle body 2 communicate with each other. Moreover, the radiator 5 is placed ahead of the engine 4 so that the air flowing into the engine compartment 3 from the grill opening portion 7 hits thereon.

Furthermore, a fan 6 is provided behind (a right side in Fig. 1) the radiator 5. Moreover, the fan 6 rotates, whereby the air effectively flows through the radiator 5.

In the present embodiment, the grill opening portion 7 is formed below a bumper 8. Furthermore, a front grill 9 constituting a design surface (a lower grill) is affixed to an opening end 7a of the grill opening portion 7. Moreover, the vehicle 1 of the present embodiment includes a grill shutter device 10 capable of controlling the flow rate of the air flowing into the engine compartment 3 from the grill opening portion 7.

Specifically, the grill shutter device 10 includes a shutter mechanism 11 capable of controlling the flow rate of the air based on the opening and closing operation, and a frame 13 as a structure that supports the shutter mechanism 11 in the grill opening portion 7.

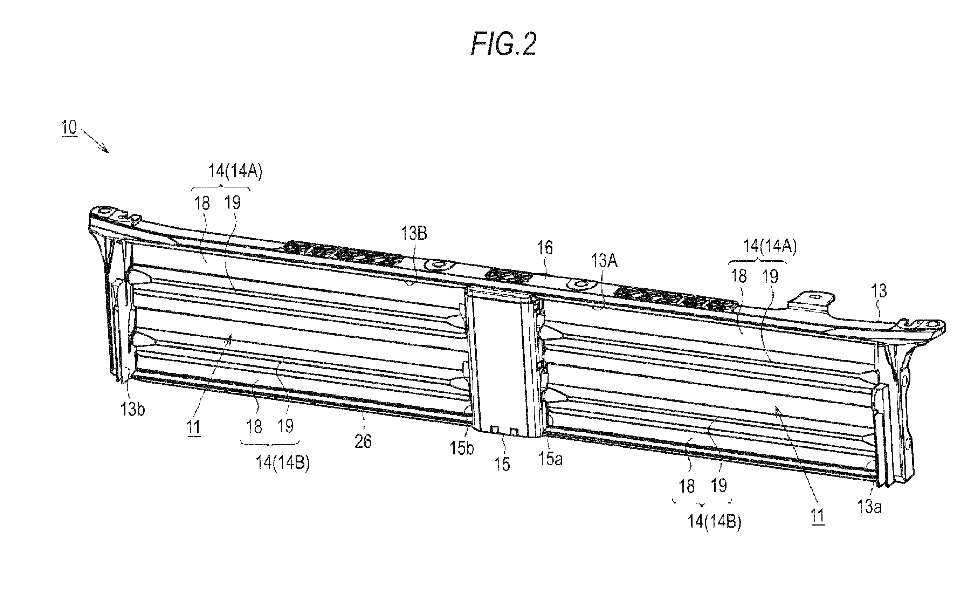

As shown in Fig. 2, the frame 13 is formed in a substantially laterally long square framework shape extending in a width direction of the vehicle body 2. Furthermore, the shutter mechanism 11 is formed by arranging and placing a plurality of movable fins 14 within the framework of the frame 13. Furthermore, the frame 13 is provided with an actuator portion 15 that performs the opening and closing drive of each movable fin 14. Moreover, as shown in Fig. 1, the frame 13 is placed in the grill opening portion 7 by fixing an upper framework portion 16 thereof to a bumper reinforcement 17.

Furthermore, specifically, as shown in Fig. 2, the actuator portion 15 of the present embodiment is provided substantially in the center in the width direction of the frame 13 having a substantially columnar external form. Moreover, thereby, two left and right opening portions 13A and 13B partitioned by the actuator 15 are formed within the framework of the frame 13.

Meanwhile, each movable fin 14 includes a substantially long flat plate-like fin portion 18 extending in the width direction of the frame 13, and has side surfaces 15a and 15b of the corresponding actuator portion 15, and a rotation shaft 19 spanned between inner surfaces 13a and 13b of the frame 13 facing the same direction. Specifically, two rows of upper and lower movable fins 14 (14A and 14B) are each placed in parallel within the respective opening portions 13A and 13B. Moreover, the actuator portion 15 is able to perform the opening and closing driving of the shutter mechanism 11, by rotating each movable fin 14 around the rotation shaft 19.

That is, as shown in Fig. 1, each movable fin 14 rotates in a direction (a clockwise direction in Fig. 1) in which the fin portion 18 enters a state of being parallel to the in-flow direction of the air flowing-in from the grill opening portion 7, whereby the shutter mechanism 11 of the present embodiment enters an opened state. Moreover, each movable fin 14 rotates in a direction (a counterclockwise direction in Fig. 1) in which the fin portion 18 enters a state of intersecting with the in-flow direction of the air, whereby the shutter mechanism 11 enters a closed state.

The grill shutter device 10 of the present embodiment controls the rotation of each movable fin 14 using the actuator portion 15. Moreover, it is possible to control the flow rate of the air flowing into the engine compartment 3 from the grill opening portion 7, based on the opening and closing operation of the shutter mechanism 11 due to the rotation of each movable fin 14.

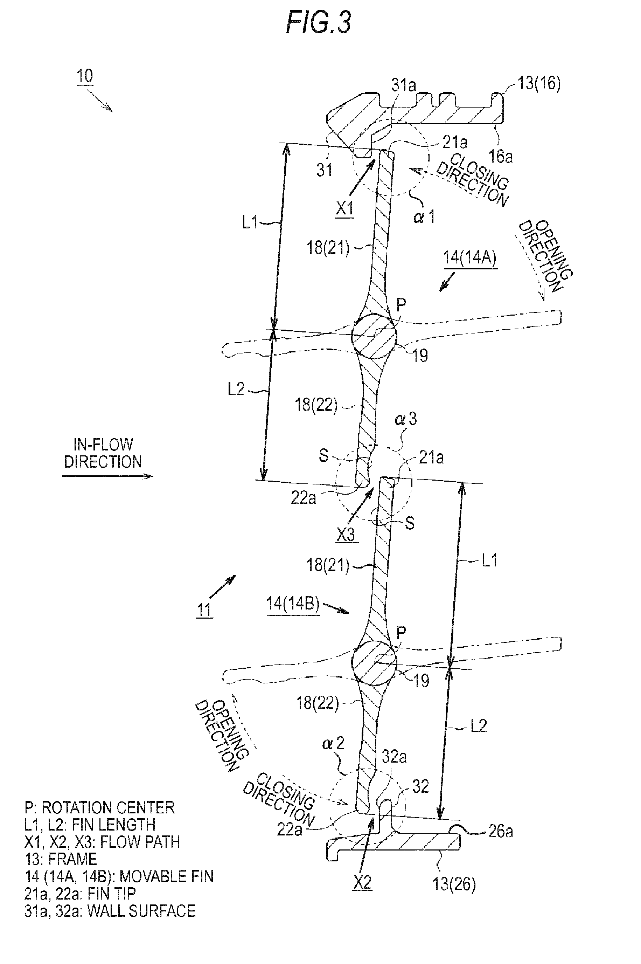

Furthermore, as shown in Fig. 3, in the present embodiment, in each movable fin 14, the fin portion 18 is constituted by a first fin portion 21 and a second fin portion 22 extending in an opposite direction with the rotation shaft 19 interposed therebetween. Moreover, in each movable fin 14, a fin length L1 from a rotation center P to a leading end (a fin tip 21 a) of the first fin portion 21 is not equal to a fin length L2 from the rotation center P to a leading end (a fin tip 22a) of the second fin portion 22 side.

Specifically, in each movable fin 14, the fin length L1 of the first fin portion 21 side is longer than the fin length L2 of the second fin portion 22 side (L1 > L2). That is, in the present embodiment, the first fin portion 21 forms a long fin portion, and the second fin portion 22 forms a short fin portion. Furthermore, in each movable fin 14, the first fin portion 21 is placed so as to be located above (upside in Fig. 3) the rotation shaft 19. Moreover, in the present embodiment, there is provided a configuration that applies the moment of the opening direction to each movable fin 14.

Specifically, as mentioned above, each movable fin 14 rotates around the rotation shaft 19 (the rotation center P) so that the fin tips 21a and 22a draw a circular-arched track. Moreover, in the present embodiment, the rotation direction (the counterclockwise direction in Fig. 3) of each movable fin 14, in which the fin tip 21 a of the first fin portion 21 side moves toward the in-flow direction upstream side (the left side in Fig. 3) of the air, is a "closed direction" corresponding to the closing operation of the shutter mechanism 11.

That is, force of pressing each movable fin 14 toward the downstream side (the right side in Fig. 3) acts on each movable fin 14, based on the pressure (the wind pressure) of the air flowing-in from the grill opening portion 7. Moreover, in the present embodiment, by lengthening the first fin portion 21 side of the fin lengths L1 and L2 of the two directions with the rotation center P interposed therebetween, the rotational force (the clockwise direction in Fig. 3) in which the fin tip 21 a moves toward the in-flow direction downstream side (the right side in Fig. 3) of the air, that is, the moment of the opening direction is generated in each movable fin 14.

Furthermore, a weight balance of each movable fin 14 is configured so that the first fin portion 21 side located above the rotation shaft 19 is heavier than the second fin portion 22 side located below the rotation shaft 19, based on a difference between the fin lengths L1 and L2 of the first fin portion 21 and the second fin portion 22. Moreover, in the present embodiment, thereby, the rotational force (the clockwise direction in Fig. 3) in which the fin tip 21 a moves toward the in-flow direction downstream side (the right side in Fig. 3) of the air, that is, the moment of the opening direction is generated in each movable fin 14, based on the gravitational force.

Furthermore, in the present embodiment, the upper framework portion 16 and a lower framework portion 26 of the frame 13 are each provided with a first protrusion portion 31 and a second protrusion portion 32 that protrude into the framework of the frame 13 from inner wall surfaces 16a and 26a.

Specifically, the first protrusion portion 31 is provided so as to protrude downward from the inner wall surface 16a of the upper framework portion 16, in the movement direction of the fin tip 21 a of the first fin portion 21 in each of the upper movable fins 14A, that is, at the position of the in-flow direction upstream side of the air, when each movable fin 14 rotates in the closing direction (an area α1 in Fig. 3). Moreover, the second protrusion portion 32 is provided so as to protrude upward from the inner wall surface 26a of the lower framework portion 26, in the movement direction of the fin tip 22a of the second fin portion 22 in each of the lower movable fin 14B, that is, at the position of the in-flow direction downstream side of the air, when each movable fin 14 rotates in the closing direction (an area α2 in Fig. 3)

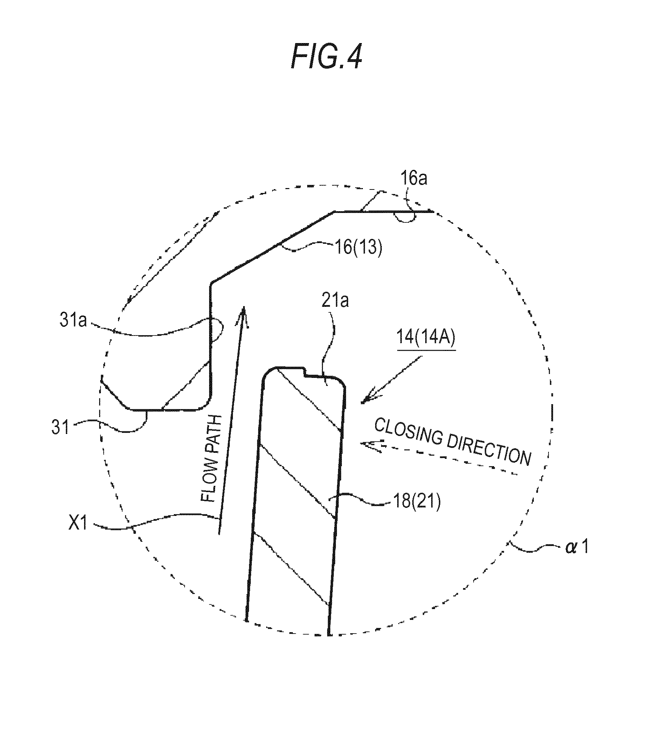

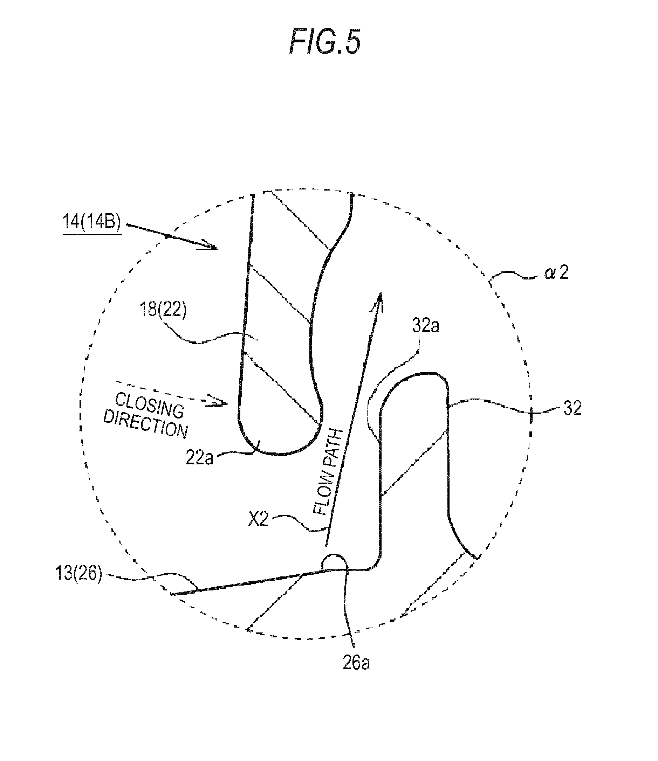

Specifically, as shown in Fig. 4, the first protrusion portion 31 has a wall surface 31 a facing the fin tip 21 a of each upper movable fin 14A when each movable fin 14 is located at the rotation position corresponding to the fully-closed state. Furthermore, as shown in Fig. 5, the second protrusion portion 32 has a wall surface 32a facing the fin tip 22a of each lower movable fin 14B when each movable fin 14 is located at the rotation position corresponding to the fully-closed state. Moreover, as shown in Figs. 4 and 5, in the present embodiment, thereby, between the wall surface 31 a of the first protrusion portion 31 and the fin tip 21 a of each upper movable fin 14A, and between the wall surface 32a of the second protrusion portion 32 and the fin tip 22a of each lower movable fin 14B, flow paths X1 and X2 of the air flowing-in from the grill opening portion 7 are each formed.

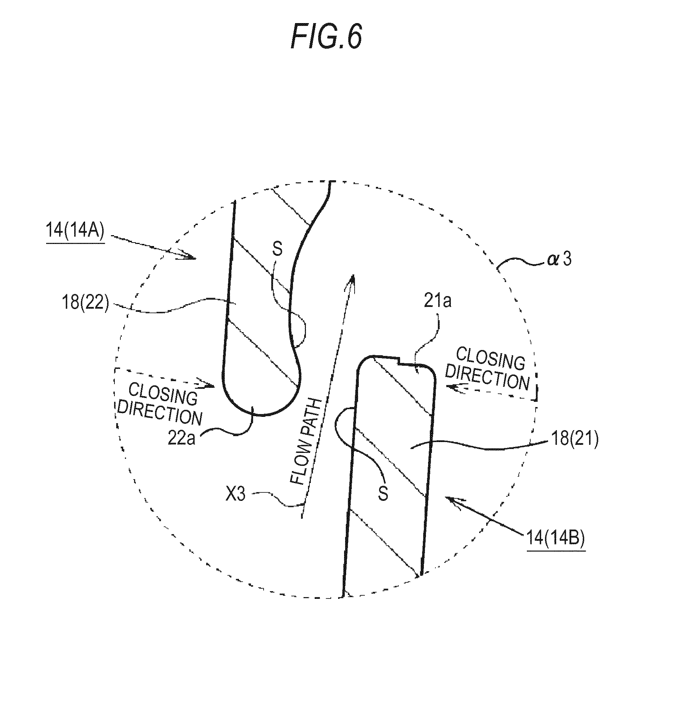

Furthermore, as shown in Fig. 3, each movable fin 14 is placed so that the leading ends of respective movable fins 14 adjacent to each other in the vertical direction overlap each other, that is, the fin tip 22a of each upper movable fin 14A and the fin tip 21 a of each lower movable fin 14B overlap each other in the in-flow direction of the air, when being located at the rotation position corresponding to the fully-closed state (an area α3 in Fig. 3). Moreover, as shown in Fig. 6, in the present embodiment, thereby, between the fin tip 22a of each upper movable fin 14A and the fin tip 21 a of each lower movable fin 14B, a flow path X3 of the air flowing-in from the grill opening portion 7 is also formed by setting the mutual outer surface S as the wall surface.

Next, an operation of the grill shutter device 10 of the present embodiment will be described.

In the present embodiment, by the rotation of each movable fin 14 in the closing direction, between the fin tip 21 a of each upper movable fin 14A, the fin tip 22a of each lower movable fin 14B, and the wall surfaces 31 a and 32a facing each of the fin tips 21 a and 22a, the flow paths X1 and X2 of the air flowing-in from the grill opening portion 7 are each formed. Moreover, between the fin tip 22a of each upper movable fin 14A and the fin tip 21 a of each lower movable fin 14B, the flow path X3 of the air flowing-in from the grill opening portion 7 is also formed by setting the mutual outer surface S as the wall surface.

That is, each of the flow paths X1, X2 and X3 are narrowed as each movable fin 14 rotates to the closing direction side. Moreover, in the state where each movable fin 14 rotates up to the position close to the fully-closed state, the negative pressure due to a so-called Venturi effect is generated in each of the flow paths X1, X2 and X3, based on a rise of the flow velocity.

The grill shutter device 10 of the present embodiment generates the moment of the closing direction in each movable fin 14 using the negative pressure. Moreover, thereby, it is possible to maintain each movable fin 14 at the rotation position close to the fully-closed state, without requiring a great drive force.

As mentioned above, according to the present embodiment, the following effects can be obtained.

(1) In each movable fin 14, the fin lengths L1 and L2 of two directions with the rotation center P interposed therebetween are set to the unequal lengths (L1 > L2) so that the moment of the opening direction is generated in each movable fin 14 based on the pressure of the air flowing-in from the grill opening portion 7. Moreover, the upper framework portion 16 and the lower framework portion 26 of the frame 13 are provided with the first protrusion portion 31 and the second protrusion portion 32 having the wall surfaces 31 a and 32a located in the movement direction of the fin tips 21 a and 22a to form the flow paths X1 and X2 of the air between the fin tips, when each movable fin 14 moves in the closing direction.

That is, the moment of the opening direction is generated in each movable fin 14 by the wind pressure, whereby the opening operation of the shutter mechanism 11 is easily carried out. As a result, the opening operation of the shutter mechanism 11 can be more reliably carried out. Moreover, particularly, in the running state where there is a need to cool a heat generating part (an engine or the like), it is possible to effectively prevent the shutter mechanism 11 from being fixed in the closed state. Furthermore, each movable fin 14 rotates up to the position close to the fully-closed state, whereby the negative pressure based on the flow velocity of the air flowing through the flow paths X1 and X2 is generated in the flow paths X1 and X2 formed between each of the fin tips 21 a and 22a and each of the wall surfaces 31 a and 32a (the Venturi effect). Moreover, it is possible to stably maintain each movable fin 14 at the rotation position close to the fully-closed state by the use of the negative pressure, without requiring a great drive force. In addition, there is no need for a complicated holding mechanism such as a clutch, and there is also no need for a configuration that restricts the reverse input rotation from the output side using the worm gear or the like. As a result, when a passenger notices that the closed fixing is generated in the shutter mechanism 11, it is possible to manually carry out the opening operation of the shutter mechanism from the movable fin 14 side. Accordingly, according to the above-described configuration, it is possible to combine the reliable opening operation of the shutter mechanism 11 with stability of the closed state thereof by the simple configuration in which the reverse input rotation from the output side is permitted.

(2) Furthermore, by forming each of the wall surfaces 31 a and 32a at the rigid location such as the frame 13, the negative pressure generated in each of the flow paths X1 and X2 can be effectively used, and it is possible to effectively generate the moment of the closing direction in each movable fin 14. As a result, the shutter mechanism 11 can be more stably maintained in the closed state.

(3) When each movable fin 14 is located at the rotation position corresponding to the fully-closed state, each movable fin 14 is placed so that the leading ends of the movable fins 14 adjacent to each other in the vertical direction thereof overlap each other, that is, the fin tip 22a of each upper movable fin 14A and the fin tip 21 a of each lower movable fin 14B overlap each other in the in-flow direction of the air.

According to the above-described configuration, between the fin tip 22a of each upper movable fin 14A and the fin tip 21 a of each lower movable fin 14B, the flow path X3 is also formed which sets the mutual outer surface S as the wall surface. Moreover, it is possible to effectively generate the moment of the closing direction in each movable fin 14, by the use of the negative pressure generated in the flow path X3, that is, force by which the fin tips 22a and 21 a forming the flow path X3 pull against each other toward the closing direction. As a result, the shutter mechanism 11 can be more stably maintained in the closed state.

(4) The weight balance of each movable fin 14 is set so that the first fin portion 21 side located above the rotation shaft 19 is heavier than the second fin portion 22 side located below the rotation shaft 19, based on a difference between the fin lengths L1 and L2 of the first fin portion 21 and the second fin portion 22. Moreover, each movable fin 14 is constituted so that the moment of the opening direction based on the gravitational force is generated by the weight balance.

According to the above-described configuration, the opening operation of the shutter mechanism 11 is more easily carried out. As a result, the opening operation of the shutter mechanism 11 can be more reliably carried out.

In addition, the above-described embodiment may be changed, as will be described below.

· In each of the above-described embodiments, the air flowing-in from the grill opening portion 7 is taken into the engine compartment 3 formed in the vehicle body 2. However, if there is an inner space of the vehicle body 2 capable of controlling the flow rate of the flowing-in air based on the opening and closing operation of the shutter mechanism 11, the intake destination of the air may not be the engine compartment 3, without being limited thereto. That is, for example, there may be a space into which the air flowing-in from the grill opening portion 7 is introduced, such as an accommodation chamber of a heat exchanger such as the radiator 5, and the space may be applied to a vehicle in which an engine is placed in a rear part or a center of the vehicle body, or a vehicle not equipped with an engine in a vehicle body inner space ahead of the vehicle interior, such as an electric automobile.

· In the above-described embodiments, the grill opening portion 7 is formed below the bumper 8. However, this disclosure may be applied to the grill opening portion 7 provided above the bumper 8, without being limited thereto. That is, the front grill 9 may be an upper grill.

· Furthermore, in each of the above-described embodiments, the two rows of upper and lower movable fins 14 are each disposed in parallel within each of the opening portions 13A and 13B of the frame 13 partitioned by the actuator portion 15. However, the number of each movable fin is not necessarily limited thereto. That is, for example, there may be a configuration that includes three rows of movable fins or more. Furthermore, each movable fin may be arranged in a row. Moreover, this disclosure may be applied to a configuration that performs the flow rate control using the opening and closing operation of one movable fin.

· Furthermore, the placement of the actuator portion 15 and the arrangement of the movable fin may also be suitably changed. For example, the actuator portion may be placed in the end portion of the frame 13 in the width direction. Furthermore, a configuration may be embodied in which each movable fin is vertically arranged within the framework of the frame, by including the rotation shaft spanned in the vertical direction or the like. Furthermore, in this case, the wall surface forming the flow path between the wall surface and the fin tip may be formed in the side framework portion of the frame.

· Furthermore, the shape of the structure supporting the movable fin may not be necessarily a square framework shape such as the frame 13.

· In the above-described embodiments, the flow path X1 is formed between the wall surface 31a of the first protrusion portion 31 provided in the upper framework portion 16 of the frame 13 and the fin tip 21a of each upper movable fin 14A. Furthermore, the flow path X2 is formed between the wall surface 32a of the second protrusion portion 32 provided in the lower framework portion 26 of the frame 13 and the fin tip 22a of each lower movable fin 14B. Moreover, between the fin tip 22a of each upper movable fin 14A and the fin tip 21 a of each lower movable fin 14B, the flow path X3 setting the mutual outer surface S to the wall surface is also formed. However, there may be a configuration in which any one of the flow path X1 between the upper framework portion 16 of the frame 13 and the fin tip 21 a, the flow path X2 between the lower framework portion 26 and the fin tip 22a and the flow path X3 between the fin tip 22a and the fin tip 21 a is formed, without being limited thereto. Furthermore, there may be a configuration in which any one of each of the flow paths X1, X2 and X3 is not formed.

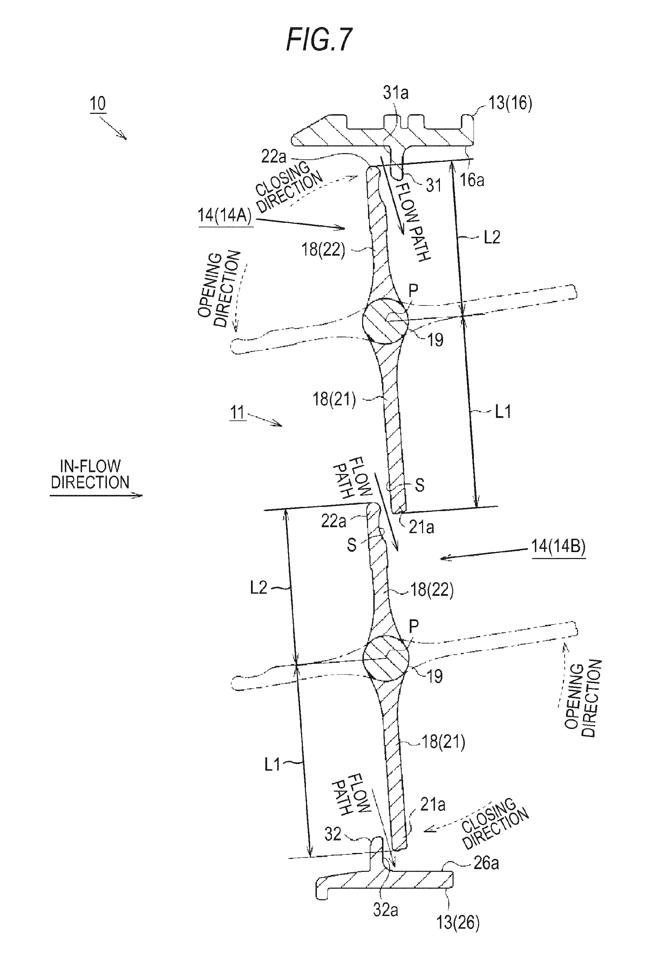

· In the above-described embodiments, each movable fin 14 is placed so that the first fin portion 21 side as the long fin portion is placed above the rotation shaft 19. However, there may be a configuration in which each movable fin 14 is placed so that the first fin portion 21 side is located below the rotation shaft 19, without being limited thereto, as shown in Fig. 7. Furthermore, in the example shown in Fig. 7, the rotation direction (the closing direction) of each movable fin 14 corresponding to the closing operation of the shutter mechanism 11 is opposite to the above-described embodiments (the clockwise direction in Fig. 7, and the counterclockwise direction is the closing direction in Fig. 3). Thus, in order to generate the moment of the opening direction based on the gravitational force in each movable fin 14, the weight balance thereof is set so that the second fin portion 22 side located above the rotation shaft 19 is heavier than the first fin portion 21 side located below the rotation shaft 19, by providing a ballast in the second fin portion 22 serving as the short fin portion side or the like.

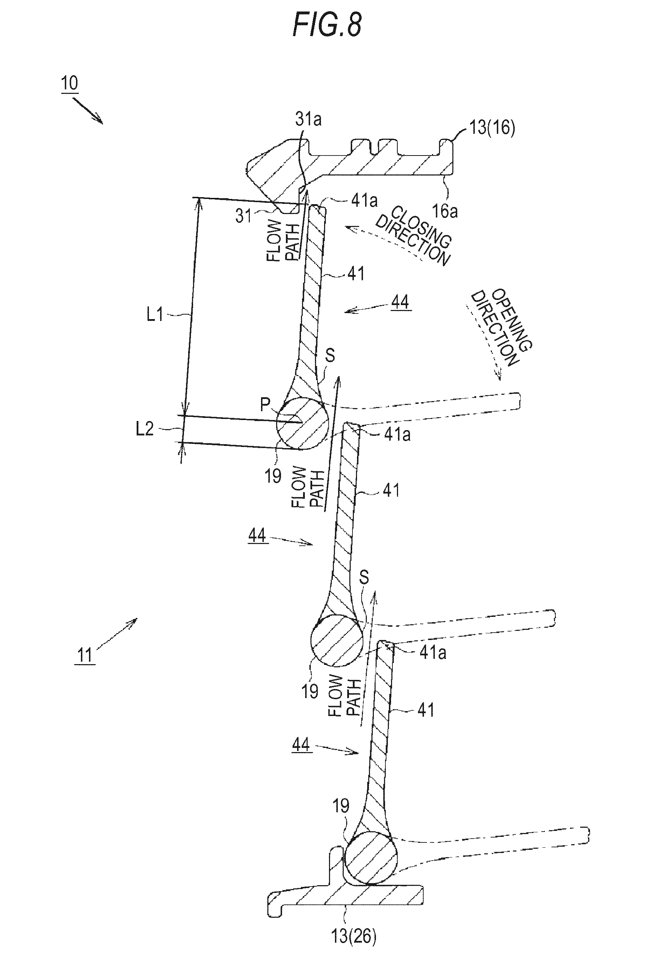

**·** Furthermore, as shown in Fig. 8, this disclosure may be embodied to a configuration in which one fin length L2 with the rotation center P interposed therebetween is substantially the same as the radius of the rotation shaft 19, that is, which includes a movable fin 44 in which a fin portion 41 thereof is extended substantially only in one direction. Furthermore, in this case, a fin tip 41 a of the fin portion 41 may overlap the rotation shaft 19 of the adjacent row of movable fin 44 by the rotation of each movable fin 44. Thereby, it is possible to form the flow path in which the negative pressure based on the flow velocity is generated between both, in the same manner as the flow path X3 in the above-described embodiment.

· In the above-described embodiments, although the moment of the opening direction based on the gravitational force is generated in each movable fin 14, there may be a configuration in which the moment of the opening direction based on the gravitational force is not generated.

Next, the technical idea capable of being understood from the above-described embodiments will be described together with the effects.

(a) A grill shutter device in which the movable fin has a long fin portion and a short fin portion extending in an opposite direction with the rotation shaft interposed therebetween.

(b) The movable fin is configured so that the moment of the opening direction based on the gravitational force is generated on the basis of the fact that the fin lengths of the two directions are not equal to each other. By such a configuration, the opening operation of the shutter mechanism is more easily carried out. As a result, the opening operation of the shutter mechanism can be more reliably carried out.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly it is expressly intended that all such variations, changes and equivalents which fall within the spirit and scope of the present invention as defined in the claims, be embraced thereby.

## Claims

1. A grill shutter device configured to be placed to a grill opening portion of a front portion of a vehicle body, comprising
a movable fin that is supported to be able to move rotationally and controls a flow rate of air flowing into a vehicle body from a grill opening portion, by an opening and closing operation due to moving rotationally,
wherein the movable fin is formed so that fin lengths of two directions with a rotation center of the movable fin interposed therebetween are set to unequal lengths so that moment of a direction performing the opening operation based on the pressure of the air flowing-in from the grill opening portion is generated, and
when the movable fin rotates in a closing direction, a wall surface forming a flow path of the air between the wall surface and a leading end is formed in a direction in which the leading end of the movable fin moves is formed.

2. The grill shutter device according to claim 1,
wherein the wall surface is formed in a structure that supports to be able to move rotationally the movable fin.

3. The grill shutter device according to claim 1 or 2,
wherein the device includes a plurality of the movable fins arranged in parallel, and
the respective movable fins are placed so as to overlap with the movable fin of an adjacent row in an in-flow direction of the air, by the rotation in the closing direction.

4. The grill shutter device according to any one of claims 1 to 3,
wherein the movable fin is configured so that the moment of direction performing the opening operation based on gravitational force is generated.

5. The grill shutter device according to any one of claims 1 to 4
wherein the movable fin has the movable fin has a long fin portion and a short fin portion extending in an opposite direction with the rotation shaft interposed therebetween.

6. The grill shutter device according to any one of claims 1 to 5,
wherein the movable fin is configured so that the moment of the opening direction based on the gravitational force is generated on the basis of the fact that the fin lengths of the two directions are not equal to each other.
